# EUROPEAN PATENT APPLICATION

(11) **EP 1 762 212 A1**
(43) Date of publication of application: **14.03.2007**
(21) Application number: 05019808.4
(22) Date of filing: 12.09.2005
(51) Int. Cl.: A61H 1/00, A47C 21/00

(54) **Structure of magnetic levitation bed**

(71) Applicant: Cheng, Shao-Szu, Taipei City (TW)
(72) Inventor: Cheng, Shao-Szu, Taipei City (TW)
(74) Representative: Ruschke, Hans Edvard

(57) **Abstract**

A magnetic levitation bed is disclosed to include a base, a bed frame suspending on the base by magnetic levitation and controllable to oscillate in transverse direction as well as longitudinal direction, magnetic guide tracks provided at the base for guiding oscillation of the bed frame in course, and an emergency brake system controlled by a sensor for stopping the bed frame immediately upon an emergency case by means of a magnetic attractive force.

## Description

### BACKGROUND OF THE INVENTION

### 1. Field of the Invention

The present invention relates to a bed and more particularly to, a magnetic levitation bed, which enables the bed frame to be suspended on a magnetic cushion and oscillated transversely/longitudinally.

### 2. Description of the Related Art

Conventional massaging beds are commonly made in the form of a waterbed or aircushion bed in which links, gears, transmission belts, transmission chains are provided between the bed frame and the base and driven to move the bed frame relative to the base. A hydraulic mechanism may be used and controlled to oscillate the bed frame relative to the base. These conventional designs use motor to drive the transmission or hydraulic mechanism. During operation, the moving parts of the mechanism may injure the user or operator accidentally. Further, the driving motor consumes much electric energy and produces a big noise during operation. The motor may be burned out when overload or if the operator forgot to turn off power supply.

US 11/024,499 discloses a magnetic levitation bed, which was an invention of the present inventor. The magnetic levitation bed comprises a bed frame and a base. The bed frame comprises a plurality of permanent magnet arrays arranged at the bottom side thereof, a first cam-fitting mechanism, and a second cam-fitting mechanism. The base is adapted to support the bed frame, comprising a power control box, a plurality of electromagnet arrays arranged corresponding to the permanent magnet arrays at the bed frame and controllable by the control box to attract and repulse the permanent magnet arrays, a first low-speed motor controllable by the power control box, a first cam coupled to the first low-speed motor corresponding to the first cam-fitting mechanism for acting against the first cam-fitting mechanism to oscillate the bed frame in transverse direction upon rotation of the first low-speed motor, a second low-speed motor controllable by the power control box, a second cam coupled to the second low-speed motor corresponding to the second cam-fitting mechanism for acting against the second cam-fitting mechanism to oscillate the bed frame in longitudinal direction upon rotation of the second low-speed motor, a remote-control receiver controllable by a remote controller for controlling the operation of the power control box, and sensor means adapted to detect oscillation of the bed frame and to provide a signal indicative of the position change of the bed frame to a microprocessor in the remote-control receiver for enabling the emote-control receiver to control the operation of the power control box subject to the data received from the sensor means. This design of magnetic levitation bed is functional. However, this design of magnetic levitation bed has neither means to correct movement of the bed frame when the bed frame is moving out of source, nor means to stop the bed frame upon an emergency case.

### SUMMARY OF THE INVENTION

The present invention has been accomplished under the circumstances in view. It is the main object of the present invention to provide a magnetic levitation bed, which has means to guide movement of the bed frame relative the base in course. It is another object of the present invention to provide a magnetic levitation bed, which has means to limit movement of the bed frame relative to the base to a predetermined range. It is still another object of the present invention to provide a magnetic levitation bed, which has means to stop the bed frame automatically upon an emergency case. According to one aspect of the present invention, the magnetic levitation bed comprises a plurality of safety universal suspension arms installed in the base. During operation of the magnetic levitation bed, the safety universal suspension arms limit the oscillation of the bed frame to a predetermined range. According to another aspect of the present invention, the base comprises a plurality of magnetic guide tracks arranged corresponding to the permanent magnets at the bed frame for guiding oscillation of the bed frame relative to the base in course. Each magnetic guide track comprises an arched transverse guide rail and an arched longitudinal guide rail. The arched transverse guide rail and the arched longitudinal guide rail each have two distal ends curving smoothly upwards. According to still another aspect of the present invention, an emergency brake system is provided for stopping the bed frame upon an emergency case during the operation of the magnetic levitation bed. The emergency brake system comprises a plurality of iron members fixedly provided at the bottom side of the bed frame, and a plurality of mini electromagnets provided at the base and controlled by the sensor to attract the iron members and to further stop the bed frame in case of the bed frame is moved out of the predetermined range or when a sudden power failure or earthquake occurred.

### BRIEF DESCRIPTION OF THE DRAWINGS

FIG. 1 is a top plain view of a bed frame for magnetic levitation bed according to the present invention.
FIG. 2 is a front view of the bed frame for magnetic levitation bed according to the present invention.
FIG. 3 is a top view of a base for magnetic levitation bed according to the present invention.
FIG. 4 is a front view of the base for magnetic levitation bed according to the present invention.
FIG. 5 is a side view of the base for magnetic levitation bed according to the present invention.
FIG. 6 is a perspective view showing the structure of the guide track for the magnetic levitation bed according to the present invention.

### DETAILED DESCRIPTION OF THE INVENTION

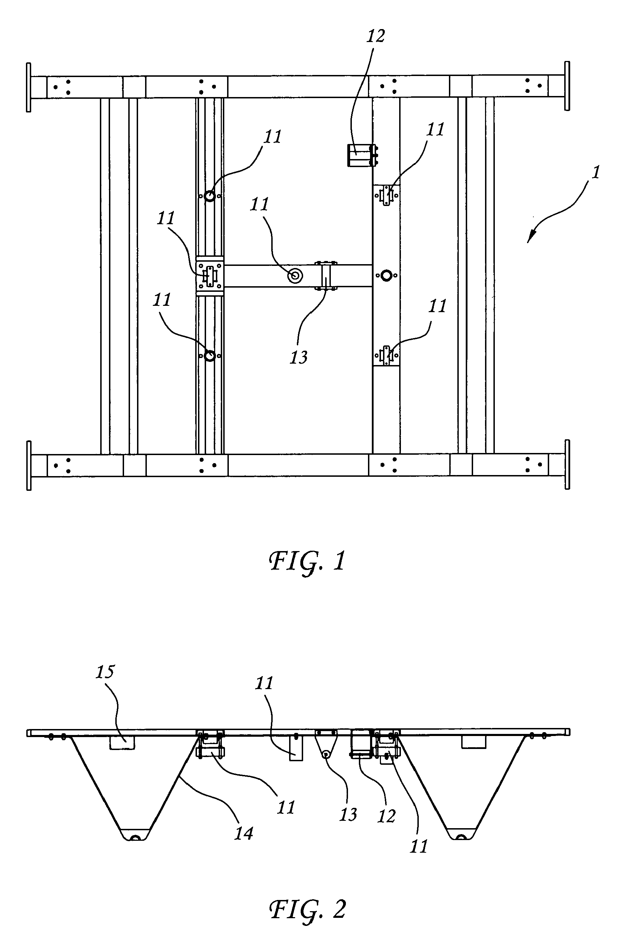

Referring to FIGS. 1~4, a magnetic levitation bed in accordance with the present invention is comprised of a bed frame **1** and a base **2.**

Referring to FIGS. 1 and 2, the bed frame **1** is a framework of rigid material. If desired, the bed frame 1 can be attached with a headboard, sideboards, a footboard, a stereo system, a remote controller, and/or a mattress. The bed frame **1** has a plurality of foot members **14** downwardly extending from the bottom wall, a plurality of rubber pads **15** provided at the bottom wall, a plurality of permanent magnet arrays **11** arranged at suitable locations at the bottom wall, a first cam-fitting mechanism **12** provided at the bottom wall near one lateral side, and a second cam-fitting mechanism **13** provided at the bottom wall on the middle.

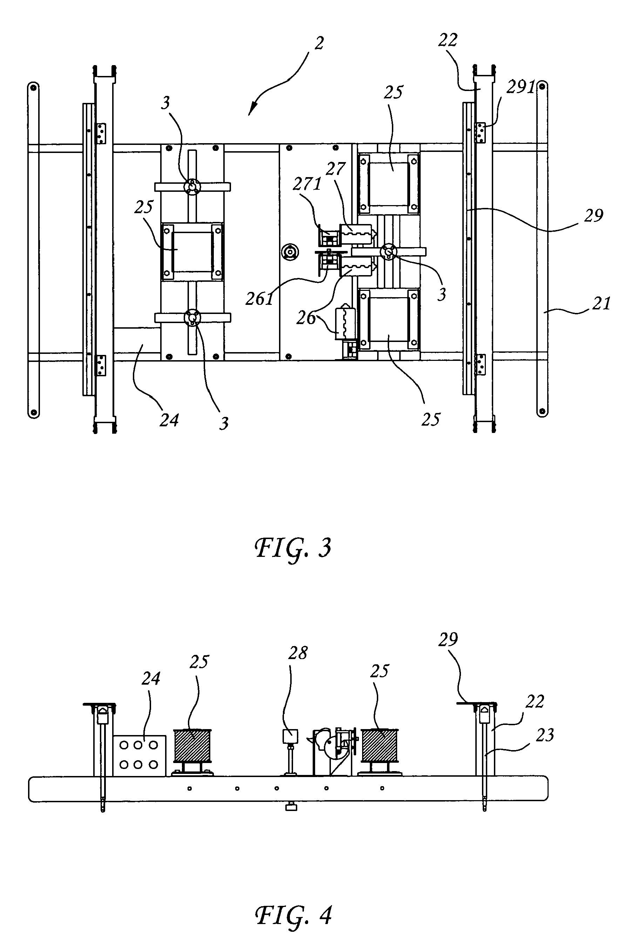

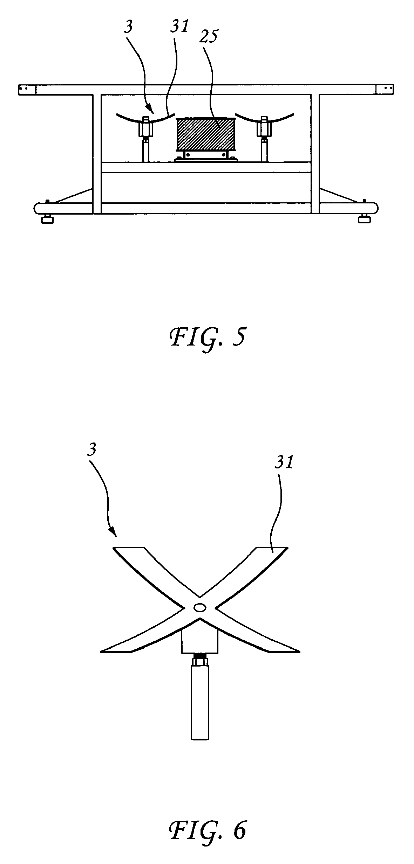

Referring to FIGS. 3 and 4, the base **2** comprises a bottom frame **21,** a plurality of uprights **22,** a plurality of safety universal suspension arms **23** respectively installed in the uprights **22,** a power control box **24** mounted on the bottom frame **21** at a suitable location, a plurality of electromagnet arrays **25** arranged on the base frame **21** corresponding to the permanent magnet arrays **11** at the bed frame **1,** a first low-speed motor **26** and a second low-speed motor **27** mounted on the base frame **21,** a first cam **261** coupled to the first low-speed motor **26** corresponding to the first cam-fitting mechanism **12** at the bed frame **1,** and a second cam **271** coupled to the second low-speed motor **27** corresponding to the second cam-fitting mechanism **13** at the bed frame **1.** The bed frame **1** is installed in the base **2,** keeping the rubber pads **15** respectively supported on the uprights **22.** After installation of the bed frame **1** in the base **2,** the first cam **261** is kept in close contact with the first cam-fitting mechanism **12,** the second cam **271** is kept in close contact with the second cam-fitting mechanism **13,** and the permanent magnet arrays **11** are respectively laid on the electromagnet arrays **25.** Further, an upwardly facing sensor (electric eye) **28** is provided at the base **2.** A remote-control receiver (not shown) is also installed in the base **2** for receiving control signal from a remote controller.

The operation of the present invention is outlined hereinafter.

Upon receipt of the start signal from the remote controller, the remote-control receiver immediately drives the power control box **24** to start the electromagnet arrays **25,** thereby producing a magnetic repulsive force between the electromagnet arrays **25** and the permanent magnet arrays **11.** The magnetic repulsive force forms a magnetic cushion, and the bed frame **1** is suspended on the magnetic cushion above the uprights **22** of the base **2.**

Upon receipt of a transverse oscillation signal from the remote controller, the remote-control receiver immediately drives the power control box **24** to start the first low-speed motor **26,** causing the first cam **261** to rotate relative to the first cam-fitting mechanism **12** through one run, and therefore the bed frame **1** is displaced slightly rightwards. At this time, the sensor (electric eye) **28** detects position change of the bed frame **1** and provides a corresponding signal to the microprocessor that controls the operation of the remote-control receiver and the power control box **24.** Upon receipt of the signal, the microprocessor alternates the magnetic poles of the electromagnet arrays **25,** thereby producing a magnetic attractive force between the electromagnet arrays **25** and the permanent magnet arrays **11.** By means of alternatively changing the poles of the electromagnet arrays **25,** magnetic repulsive force and magnetic attractive force are alternatively produced, thereby causing the bed frame **1** to be oscillated leftwards and rightwards. During leftward-rightward oscillation action, the safety universal suspension arms **23** limit the oscillation of the bed frame **1** to a predetermined range.

Upon receipt of a longitudinal oscillation signal from the remote controller, the remote-control receiver immediately drives the power control box **24** to start the second low-speed motor **27,** causing the second cam **271** to rotate relative to the second cam-fitting mechanism **13** through one rub, and therefore the bed frame **1** is displaced slightly backwards. At this time, the sensor (electric eye) **28** detects the position change of the bed frame **1** and provides a corresponding signal to the microprocessor that controls the operation of the remote-control receiver and the power control box **24.** Upon receipt of the signal, the microprocessor alternates the magnetic poles of the electromagnet arrays **25,** thereby producing a magnetic attractive force between the electromagnet arrays **25** and the permanent magnet arrays **11.** By means of alternatively changing the poles of the electromagnet arrays **25,** magnetic repulsive force and magnetic attractive force are alternatively produced, thereby causing the bed frame **1** to be oscillated forwards and backwards. During forward-backward oscillation action, the safety suspension arms **23** limit the oscillation of the bed frame **1** to a predetermined range.

Upon receipt of a vertical vibration signal from the remote controller, the remote-control receiver immediately drives the microprocessor to alternatively change the magnetic poles of the electromagnet arrays **25,** thereby causing a magnetic repulsive force and a magnetic attractive force to be alternatively produced between the electromagnet arrays **25** and the permanent magnet arrays **11,** and therefore the bed frame **1** is alternatively moved up and down.

Upon receipt of a stop signal from the remote controller, the remote-control receiver immediately drives the power control box **24** to cut off power supply from the electromagnet arrays **25,** and therefore the bed frame **1** immediately falls to the uprights **22** of the base **2** and then stands still on the uprights **22** of the base **2.**

The invention further comprises an auto correcting mechanism adapted to correct irregular motion of the bed frame and an emergency brake system for stopping the bed frame upon an emergency. The auto correcting mechanism comprises a plurality of ferrous guide tracks **3** respectively mounted on the base **2** corresponding to the permanent magnet arrays **11** at the bed frame **1.** The guide tracks **3** are preferably made of iron, each comprising two crossed arched rails **31.** As shown in FIGS. 5 and 6, the crossed arched rails **11** extend respectively in transverse direction and longitudinal direction, each having two ends curving smoothly upwards. The permanent magnet arrays **11** induce the guide tracks **3,** thereby producing a magnetic attractive force. During oscillation of the bed frame **1** in transverse or longitudinal direction by means of magnetic levitation, the guide tracks **3** guide the oscillation of the bed frame 1 in course. Further, because the rails **31** each have two end curving smoothly upwards, the two ends of each rail **31** are disposed close to the corresponding permanent magnet array **11** at the bed frame **1,** therefore the ends of the rails **31** limit the oscillation distance, i.e., the guide tracks **3** guide smooth oscillation of the bed frame **1** relative to the base **2** in course within a predetermined range, preventing biasing of the bed frame **1** from the course.

The aforesaid emergency brake system comprises a plurality of iron plates or beams fixedly provided at the bottom wall of the bed frame **1,** and a plurality of locating plates **29** corresponding to the iron plates or beams. The locating plates **29** are made of a hard non-conductive material, for example, bakelite, and covered with a flexible plastic or rubber covering and having embedded therein a plurality of small electromagnets (not shown). The locating plates **29** each have one side fixedly fastened to the top side of the base **2** by a metal chain **291** and the opposite side suspending in the open air. When the sensor **28** detected displacement of the bed frame **1 out** of course during oscillation due to an improper use of the machine by the user or other unexpected reasons (such as earthquake or sudden power failure), the power control box **24** immediately outputs "Emergency braking" signal, at this time the internal mini uninterrupted power supply system (not shown) in the power control box **24** provides electricity to the mini electromagnets in the locating plates **29** to magnetize the mini electromagnets, thereby causing the mini electromagnets to attract the iron plates or beams at the bottom wall of the bed frame **1,** and therefore the bed frame **1** is stopped immediately. The internal mini uninterrupted power supply system can be set to cut off power supply from the mini electromagnets after a predetermined length of time delay, for example, 1 minute, so that the bed frame **1** is automatically unlocked when the set delay time is up.

As stated above, the invention provides three safety designs. The first safety design is the action of the guide tracks **3** that guide oscillation of the bed frame **1** in course. The second safety design is the universal suspension arms **23** that prohibit movement of the bed frame **1 over** the predetermined range. The third safety design is the emergency brake system that is automatically controlled by the sensor **28** to stop the bed frame **1** upon an emergency condition.

Further, during transverse or longitudinal oscillation of the bed frame **1** relative to the base **2,** the safety universal suspension arms **23** limit the angle of oscillation of the bed frame **1** to a safety range. Further, a shielding structure (not shown) is provided to shield magnetic waves from the electromagnet arrays **25** and the permanent magnet arrays **11.**

Although particular embodiments of the invention have been described in detail for purposes of illustration, various modifications and enhancements may be made without departing from the spirit and scope of the invention. Accordingly, the invention is not to be limited except as by the appended claims.

## Claims

1. A magnetic levitation bed comprising;
a bed frame, said bed frame comprising a plurality of permanent magnet arrays arranged at a bottom side thereof, a first cam-fitting mechanism, and a second cam-fitting mechanism; and
a base adapted to support said bed frame, said base comprising a power control box, a plurality of electromagnet arrays arranged corresponding to said permanent magnet arrays at said bed frame and controllable by said control box to attract and repulse said permanent magnet arrays, a first low-speed motor controllable by said power control box, a first cam coupled to said first low-speed motor corresponding to said first cam-fitting mechanism for acting against said first cam-fitting mechanism to oscillate said bed frame in transverse direction upon rotation of said first low-speed motor, a second low-speed motor controllable by said power control box, a second cam coupled to said second low-speed motor corresponding to said second cam-fitting mechanism for acting against said second cam-fitting mechanism to oscillate said bed frame in longitudinal direction upon rotation of said second low-speed motor, a remote-control receiver controllable by a remote controller for controlling the operation of said power control box, and sensor means adapted to detect oscillation of said bed frame and to provide a signal indicative of the position change of said bed frame to a microprocessor in said remote-control receiver for enabling said remote-control receiver to control the operation of said power control box subject to the data received from said sensor means.

2. The magnetic levitation bed as claimed in claim 1, wherein said base comprises a base frame and a plurality of upright rights upwardly extending from said base frame for supporting said bed frame; said bed frame comprises a plurality of bottom rubber pads corresponding to said uprights.

3. The magnetic levitation bed as claimed in claim 1, wherein said base comprises a plurality of safety suspension arms adapted to limit the angle of oscillation of said bed frame in transverse direction and longitudinal direction.

4. The magnetic levitation bed as claimed in claim 1, wherein said bed frame comprises a plurality of iron members fixedly provided at the bottom side; said base comprises a plurality of magnetic guide tracks arranged corresponding to the permanent magnets at said bed frame for guiding oscillation of said bed frame relative to said base in course, and a plurality of mini electromagnets controllable to attract said iron members and to further stop said bed frame upon an emergency condition.

5. The magnetic levitation bed as claimed in claim 5, wherein said magnetic guide tracks each comprise an arched transverse guide rail and an arched longitudinal guide rail, said arched transverse guide rail and said arched longitudinal guide rail each having two distal ends curving smoothly upwards.
